# EUROPÄISCHE PATENTSCHRIFT

(11) **EP 2 450 498 B1**
(45) Veröffentlichungstag und Bekanntmachung des Hinweises auf die Patenterteilung: **01.04.2015**
(21) Anmeldenummer: 10014365.0
(22) Anmeldetag: 08.11.2010
(51) Int. Cl.: E04C 2/36, B32B 3/18, B32B 37/12

(54) **Sandwichplatte mit Querträger und Verfahren zu ihrer Herstellung**
Sandwich board with cross-member and method for its production
Plaque sandwich dotée d'une traverse et son procédé de fabrication

(43) Veröffentlichungstag der Anmeldung: 09.05.2012
(73) Patentinhaber: Deutsche Composite GmbH, 21481 Lauenburg / Elbe (DE)
(72) Erfinder: Biessler, Dietmar, 20149 Hamburg (DE)
(74) Vertreter: Maiwald Patentanwalts GmbH

(56) Entgegenhaltungen:
- BE-A- 735 699
- US-A- 5 462 623

## Beschreibung

Die vorliegende Erfindung betrifft eine Sandwichplatte aus mindestens einer laminierten Deckschicht und mindestens einem Kernschicht-Materialblock sowie ein Verfahren zum Herstellen einer solchen Sandwichplatte.

Sandwichplatten sind weit verbreitetes Bau- und Konstruktionsmaterial. Begrifflich fassen sie Flachmaterial zusammen, dass aus mindestens zwei Schichten besteht.

Weit verbreitet sind Sandwichplatten aus einer verhältnismäßig voluminösen Kernschicht mit jeweils einer Deckschicht auf den beiden Seiten der Kernschicht. Um zum Beispiel einer Sandwichplatte sowohl thermisch dämmende als auch mechanisch tragende Eigenschaften zu verleihen, ist eine typische Sandwichplatte aus einer Kernschicht aus leichtem, formstabilen Kunststoffschaum und beidseitigen Deckschichten zum Beispiel aus GfK- oder CfK-Laminat aufgebaut. Glasfaserverstärkter Kunststoff (GfK) und kohlefaserverstärkter Kunststoff (CfK) bestehen bekanntlich aus Glas- beziehungsweise Kohlefaser-Gewebematten (als Faserverstärkung), die auf die zu laminierende Oberfläche (hier den einen Kernschichtmaterialblock aus dem Kunststoffschaum) in einer oder mehreren Lagen übereinander gelegt und mit Kunststoff, zum Beispiel Epoxid- oder Polyester-Harz mit Härter, vorzugsweise einschließlich Flammschutz durchtränkt (bestrichen und/oder übergossen) werden (als sogenannte Matrix).

Eine Sandwichplatte sowie ein Verfahren zu deren Herstellung nach dem Stand der Technik sind aus dem Patent US 5,462,623 bekannt.

Der vorliegenden Erfindung liegt die Aufgabe zu Grunde, eine Sandwichplatte zu schaffen, die noch verbesserte Steifigkeits- und Festigkeitseigenschaft aufweist.

Diese Aufgabe wird erfindungsgemäß mittels eines Verfahrens mit den Merkmalen des Anspruchs 1 gelöst sowie durch eine Sandwichplatte mit den Merkmalen von Anspruch 7. Bevorzugte Ausgestaltungen sind in den jeweiligen Unteransprüchen angegeben.

Im erfindungsgemäßen Verfahren wird eine Sandwichplatte aus mindestens einem Kernschicht-Materialblock und mindestens einer Deckschicht zum Beispiel aus GfK- oder CfK-Laminat hergestellt, die auf den Materialblock laminiert wird. Erfindungsgemäß umfasst das Verfahren den Schritt, mindestens einen Kernschicht-Materialblock sowie einen Querträger aus einer zuvor laminierten Platte so anzuordnen, dass eine Oberfläche des Kernschicht-Materialblocks und eine Kante des Querträgers in einer Fläche liegen, die gemeinsam laminierbar ist ("eine gemeinsam laminierbare Fläche für die zu laminierende Deckschicht bilden"). Der Querträger liegt dabei in einem Winkel zu der laminierbaren Fläche - also nicht planparallel zu ihr.

Erfindungsgemäß umfasst das Verfahren dann ferner den Schritt, die laminierbare Fläche (in der die Oberfläche des Kernschicht-Materialblocks und die Kante des Querträgers liegen) so zu laminieren, dass Harz eine Verbindung zwischen einerseits der Oberfläche des Kernschicht-Materialblocks und der Kante des Querträgers und andererseits der zu laminierenden Deckschicht herstellt. Mindestens in einem Bereich also, wo die Kante des Querträgers in der laminierbaren Fläche liegt, stellt Harz der laminierten Deckschicht eine Verbindung zwischen einerseits der Oberfläche des Kernschicht-Materialblocks und der Kante des Querträgers und andererseits der zu laminierenden Deckschicht her.

Erfindungsgemäß ist auch eine Sandwichplatte der Gestalt, die sich aus der erfindungsgemäßen Herstellung ergibt.

Erfindungsgemäß also werden Sandwichplatten (insbesondere des eingangs beispielhaft erwähnten Aufbaus mit einer leichten, formstabilen Kernschicht und tragfähigen Laminat-Außenschichten) mit zusätzlicher Biege- und Torsionsteifigkeit ausgestattet, indem in die Kernschicht mindestens ein Querträger aus einer zuvor laminierten Platte einlaminiert wird.

Querträger aus einer zuvor laminierten Platte heißt erfindungsgemäß, dass eine Platte durch Laminieren hergestellt wird und dann erfindungsgemäß in einer Sandwichplatte verarbeitet wird. Platte heißt hierbei nicht zwangsläufig, eben zu sein. Sondern der erfindungsgemäße Querträger kann auch gekrümmt und/oder gewölbt, aber auch sogar zum Beispiel zickzack-oder wellenförmig sein. Durch Laminieren im erfindungsgemäßen Sinne hergestellt sein kann eine Platte zum Beispiel, indem eine oder mehrere Glas- oder Kohlefaser-Gewebematten auf einem ebenen Untergrund (oder auf einem Untergrund entsprechend der eben angedeuteten möglichen räumlichen Gestalt) ausgelegt und mit Kunststoff wie zum Beispiel Epoxidharz durchtränkt, bestrichen und/oder übergossen werden. Nach dem Aushärten des Harzes wird die so laminierte Platte von dem Untergrund abgenommen. Dazu kann der Untergrund mit Trennmittel versehen sein, um das Abnehmen zu erleichtern. Nötigenfalls wird die Platte nun zugeschnitten.

Vorzugsweise wir das erfindungsgemäße Verfahren zum Herstellen einer erfindungsgemäßen Platte folgendermaßen durchgeführt: Ein Kernschicht-Materialblock wird neben einen Querträger aus einer zuvor laminierten Platte ausgelegt. Dies geschieht vorzugsweise flächenbündig, das heißt, ein (vorzugsweise ebener) Querträger wird flächenbündig an eine (dann vorzugsweise ebene) Außenfläche (Seitenfläche, Stoßfläche) des Kernschicht-Materialblocks angelegt. Vorzugsweise an die andere Seite des Querträgers wird wieder ein Block angelegt, daran wieder ein Querträger und so weiter, zum Beispiel bis die Länger der herzustellenden Sandwichplatte erreicht ist. Diese aneinander gelegten Elemente bilden die Kernschicht der herzustellenden Sandwichplatte. Einige der Querträger sind dabei vorzugsweise so orientiert, dass die Länge, in der sie hergestellt (zum Beispiel von einer zuvor laminierten Großplatte abgeschnitten) wurden, nun als Höhe orientiert ist - also senkrecht. Die gegen diese Querträger angelegten Kernschicht-Materialblocks haben dann eine entsprechende Höhe und eine senkrechte Seitenfläche, die flächenbündig gegen den senkrecht orientierten Querträger anliegt. Andere der Querträger können dabei so orientiert sein, dass die Länge, in der sie hergestellt (zum Beispiel von einer zuvor laminierten Großplatte abgeschnitten) wurden, nun als Diagonale orientiert ist - also zum Beispiel unter 45°. Die gegen diese Querträger angelegten Kernschicht-Materialblocks sind dann entsprechend diagonal zugeschnitten und haben eine entsprechend (zum Beispiel 45°) schräge Seitenfläche, die flächenbündig gegen den senkrecht orientierten Querträger anliegt. Die Ränder dieser ausgelegten Bestandteile der Kernschicht werden vorzugsweise gerade zu einander ausgerichtet (oder, auch später zugeschnitten). Im nächsten Schritt wird nun auf eine gemeinsame Außenseite dieser bündig aneinander anschließenden Kernschicht-Bestandteile (die Außenseite aus den Oberseiten der Kernschicht-Materialblocks und den oberen Kanten der Querträger) eine Deckschicht zum Beispiel aus GfK- oder CfK-Laminat laminiert, so dass Harz der laminierten Deckschicht eine Verbindung zwischen einerseits der Oberfläche des jeweiligen Kernschicht-Materialblocks und der Kante des Querträgers und andererseits der zu laminierenden Deckschicht herstellt. Nach Trocknen dieser Deckschicht wird die Anordnung umgedreht, und das Laminieren der Deckschicht wird auf deren Unterseite wiederholt: auf die Außenseite der bündig aneinander anschließenden Kernschicht-Bestandteile (die Außenseite aus den vorherigen Unterseiten der Kernschicht-Materialblocks und den vorherigen unteren Kanten der Querträger) wird eine Deckschicht zum Beispiel aus GfK- oder CfK-Laminat laminiert, so dass Harz der laminierten Deckschicht eine Verbindung zwischen einerseits der Oberfläche des jeweiligen Kernschicht-Materialblocks und der Kante des Querträgers und andererseits der zu laminierenden Deckschicht herstellt.

Es ist zwar wegen der geometrischen Übersichtlichkeit und Einfachheit und der daraus resultierenden wirtschaftlichen Herstellbarkeit (auch wegen des relativ größeren Bedarfs an ebenen Sandwichplatten) besonders bevorzugt, aus quaderförmigem Kernschicht-Materialblock-Material (oder zumindest mit ebener, planparalleler Ober- und Unterseite) eine ebene Sandwichplatte mit einer ober- und einer unterseitigen Deckschicht herzustellen. Aber auch alle anderen räumlichen Ausgestaltungen mit gekrümmten und/oder gewölbten Elementen mit den Merkmalen eines der beiden unabhängigen Ansprüche sind erfindungsgemäß möglich.

Diese und andere Merkmale und Vorteile der vorliegenden Erfindung werden anhand von Ausführungsbeispielen in den beigefügten Abbildungen weiter erläutert.
Figur 1 zeigt räumlich schematisch das erfindungsgemäße Herstellen einer erfindungsgemäßen Sandwichplatte in drei Stadien,
Figur 2 zeigt räumlich schematisch eine Alternative zu Figur 1 ebenfalls in drei Stadien,
Figur 3 zeigt eine Seitenansicht von vier verschiedenen erfindungsgemäßen Sandwichplatten,
Figur 4 zeig räumlich schematisch das Zuschneiden von erfindungsgemäßen Querträgern aus einer zuvor laminierten Platte und
Figur 5 zeigt eine Draufsicht auf vier verschiedene alternative erfindungsgemäße Sandwichplatten.

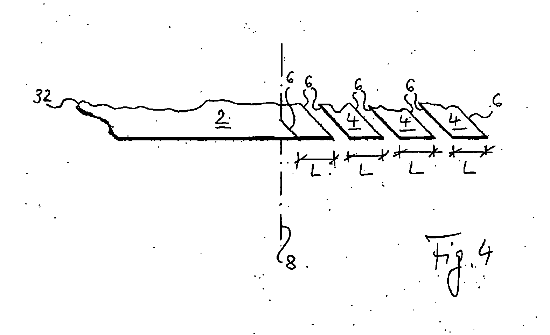

Zunächst mit Blick auf Figur 4 ist erkennbar, wie aus einer zuvor laminierten Platte 2 zum Beispiel aus faserverstärktem Kunststoff Querträger 4 abgeschnitten werden. Die Querträger 4 werden in einer Länge L von der Platte abgeschnitten. D. h. mit anderen Worten, die parallelen Schnittkanten 6 der Querträger 4 haben den Abstand L voneinander. Geschnitten werden die Querträger 4 zum Beispiel mittels einer Bandsägeoder einer Kreissäge. Das Sägewerkzeug ist in Figur 4 nur schematisch durch eine strichpunktierte Linie 8 angedeutet.

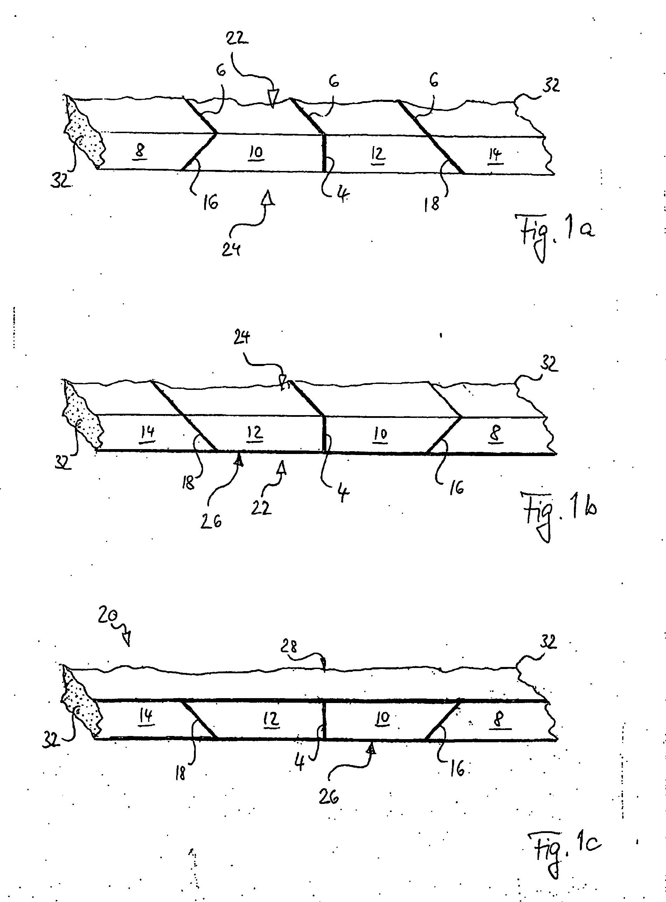

Figur 1a zeigt vier Kernschicht-Materialblocks 8, 10, 12, 14, die im Wechsel mit jeweils einem Querträger 16, 4, 18 als Kernschicht einer herzustellenden Sandwichplatte 20 (Figur 1c) bündig aneinander angeordnet sind.

Die Kernschicht-Materialblocks haben jeweils eine Oberseite 22 und eine Unterseite 24, die parallel zueinander sind. Die Querträger 4, 16 und 18 sind eben. Sie sind (mit ihrer jeweiligen Ober- bzw. Unterseite) flächenbündig an eine jeweilige ebene Außenfläche eines der Materialblocks flächenbündig angelegt. Der Querträger 4 ist so orientiert, dass seine Länge L, in der er von der zuvor laminierten Großplatte 2 gemäß Figur 4 abgeschnitten worden war, nun als Höhe orientiert ist - also in Figur 1a senkrecht. Die ausgelegten Materialblocks 8, 10, 12, 14 haben eine entsprechende Höhe, also einen Abstand L ihrer Oberseite 22 von ihrer dazu planparallelen Unterseite 24. Die Querträger 16 und 18 sind wie erkennbar diagonal unter 45° zur Oberseite 22 und Unterseite 24 orientiert. Diese beiden Querträger 16 und 18 haben eine größere Länge (L mal der Quadratwurzel aus 2), so dass ihre jeweilige obere Kante 6 mit der Oberseite der Materialblocks und ihre jeweilige untere Kante mit der Unterseite der Materialblocks eine ebene, gemeinsam laminierbare Fläche bilden.

Im nächsten Schritt wird nun auf die gemeinsam laminierbare Fläche auf der Oberseite 22 dieser bündig aneinanderliegenden Kernschicht-Bestandteile 8, 16, 10, 4, 12, 18, 14 eine Deckschicht 26 (Figur 1b) laminiert. Nach Trocknen dieser Deckschicht 26 wird die Anordnung umgedreht. Es ergibt sich dann die Anordnung gemäß Figur 1b. Erkennbar ist nun die vorherige Unterseite 24 als ebene, gemeinsam laminierbare Fläche 24 - (nun) an der Oberseite der so angeordneten Kernschicht-Elemente (von links nach rechts 14, 18, 12, 4, 10, 16, 8). Auch diese ebene, zu laminierende Fläche 24 wird nun mit einer Deckschicht 28 (Figur 1c) laminiert und trocknen gelassen. So entsteht die fertige Sandwichplatte 20 gemäß Figur 1c.

Erkennbar insbesondere in Figur 1c hat das Laminieren der beiden Deckschichten 26, 28 so stattgefunden, dass Harz der laminierten Deckschicht eine Verbindung zwischen einerseits der laminierten Deckschicht 26, 28 und andererseits den Oberflächen des jeweiligen Kernschicht-Materialblocks (auf deren beiden Seiten 22 und 24) herstellt und dass das Harz außerdem auch eine Verbindung zwischen einerseits der laminierten Deckschicht 26, 28 und andererseits den Kanten 6 der Querträger 16, 4, 18 herstellt. Um dies erfindungsgemäß zu ermöglichen, liegen die Kanten 6 der Querträger 16, 4, 18 in einer Fläche - hier sogar in einer Ebene - mit Außenseiten der Kernschicht-Materialblocks (hier an deren einer Seite 22 und der planparallel dazu liegenden anderen Seite 24). So bilden zum Beispiel gemäß Figur 1a die Oberseiten 22 der Kernschicht-Materialblocks 8, 10, 12, 14 zusammen mit den oberen Kanten 6 der Querträger 16, 4, 18 wie schon gesagt eine gemeinsam laminierbare Fläche für die zu laminierende Deckschicht (die nach dem Umdrehen gemäß Figur 1b auf der Unterseite die Bezugsziffer 26 hat).

Die Verbindung zwischen den Kanten 6 der Querträger 16, 4, 18 und den jeweiligen laminierten Flächen 26, 28 entsteht dadurch, dass beim Laminieren der Deckschichten das Harz mit der Kante eine Verbindung eingeht. Dazu ist es besonders vorteilhaft, wenn die Querträger aus demselben Laminat hergestellt wurden wie nun die Deckschichten. Zumindest die Verwendung desselben Harzes ist vorteilhaft, wenn Querträger und Deckschicht zum Beispiel aus faserverstärktem Kunststoff (GFK oder CFK; Epoxid oder Polyester) hergestellt werden.

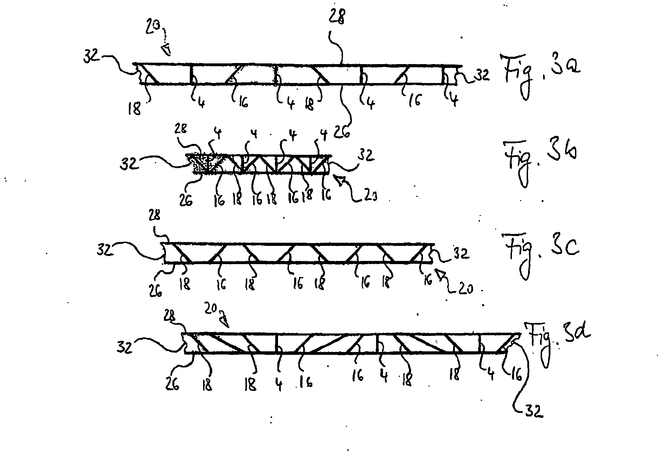

Wie soweit zu Figur 1 beschrieben entsteht eine Sandwich-Platte, die in ihrer Seitenansicht nochmals in Figur 3a abgebildet ist. Die Sandwichplatte 20 hat nämlich zwei planparallele Deckschichten 26, 28 sowie in gleichmäßigem Abstand von links nach rechts die beiden Deckschichten verbindende Querträger: senkrechte Querträger 4, zwischen denen sich unter 45° diagonal verlaufende Querträger finden, von denen abwechselnd ein Querträger 16 abfallend unter 45° nach links und ein Querträger 18 abfallend unter 45° nach rechts orientiert ist. Die Querträger 18, 4, 16, 4, 18, 4, 16, 4 usw. sind dabei soweit voneinander beabstandet, dass sie einander nicht berühren. Dies ist anders in einer alternativen Ausgestaltung einer Sandwichplatte gemäß Figur 3b: hier treffen sich immer ein diagonal nach rechts abfallender Querträger 18, ein senkrechter Querträger 4 und ein diagonal nach links abfallender Querträger 16 mit ihrer unteren Kante an der unteren Deckschicht 26, und an der oberen Decksicht 28 treffen sich (ebenfalls von links nach rechts) einer der Querträger 18 und einer der Querträger 16.

Figur 3c ist noch eine alternative Ausgestaltung einer Sandwichplatte, bei der keine senkrechten Querträger 4, sondern nur in die beiden Richtungen unter 45° diagonal orientierte Querträger 16, 18 Einsatz finden. Figur 3d zeigt schließlich eine Seitenansicht einer Sandwichplatte mit nicht nur senkrecht und unter 45°, sondern auch noch unter einem anderen Winkel orientierten Querträger. Insgesamt soll Figur 3 andeuten, dass Abstand und Orientierung der Querträger in der erfindungsgemäßen Sandwichplatte beliebig gestaltet sein können.

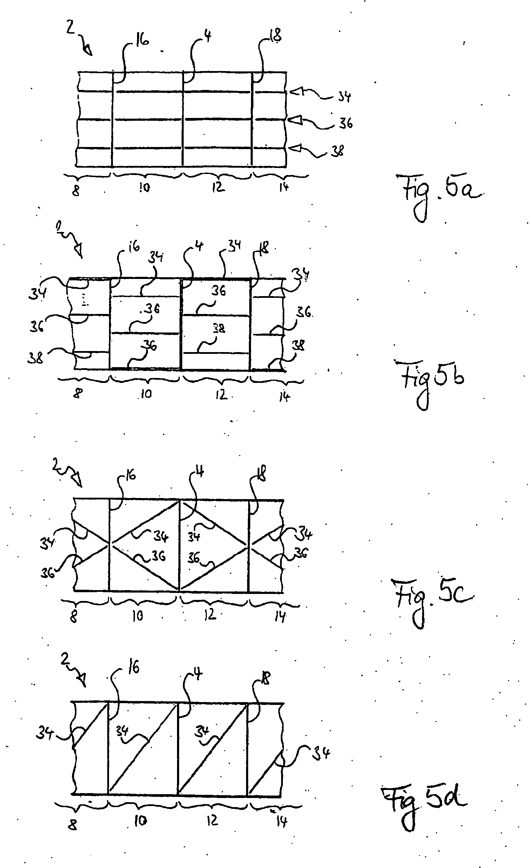

Kurz nochmals zurück zu Figur 1 kann jeder der Blöcke 8, 10, 12, 14 in Figur 1a bereits auf seiner Oberseite 22 und/oder Unterseite 24 mindestens eine Deckschicht auflaminiert haben insbesondere dann, wenn jeder der Blöcke 8, 10, 12, 14 bereits von Querträgern (Figur 5; in Figur 1 nicht dargestellt) durchzogen worden ist, und zwar auf die erfindungsgemäße Weise, wie sie zum Beispiel oben schon zu Figur 1 beschrieben wurde. Dann könnten diese bereits vorhandenen Querträger zum Beispiel rechtwinklig zu den nun gemäß Figur 1 einzulaminierenden Querträgern 16, 4, 18 bereits durch jeden der Blöcke 8, 10, 12, 14 in Figur 1a verlaufen (dann also in Figur 1a von rechts nach links). Durch das erneute Überlaminieren mit den zu laminierenden Deckschichten 26, 28 entsteht dann eine Sandwichplatte mit Querträgern 18, 4, 16 und Längsträgern 34, 36, 38 zum Beispiel nach Figur 5a oder 5b. Die Quer- und Längsträger können aber auch nicht rechtwinklig zueinander orientiert sein (zum Beispiel nach Figur 5c oder 5d), und auch die Längsträger müssen nicht rechtwinklig den Deckschichten 26, 28 orientiert sein (nicht dargestellt). Diese (auch in der Draufsicht auf die Platten 2 fachwerkartige) Orientierung der Längs- und Querträger bietet sich zum Beispiel an bei transport- und/oder fertigungsbedingt großen, vorgefertigten, länglichen Sandwichplatten 2 - zum Beispiel mit Breiten von ca. 2,5 m (in Figur 5 von oben nach unten) und Längen von ca. 12 m (in Figur 5 von rechts nach links), bei denen dann die durchgehenden Träger 16, 4, 18 vorzugsweise in Richtung der Breite verlaufen.

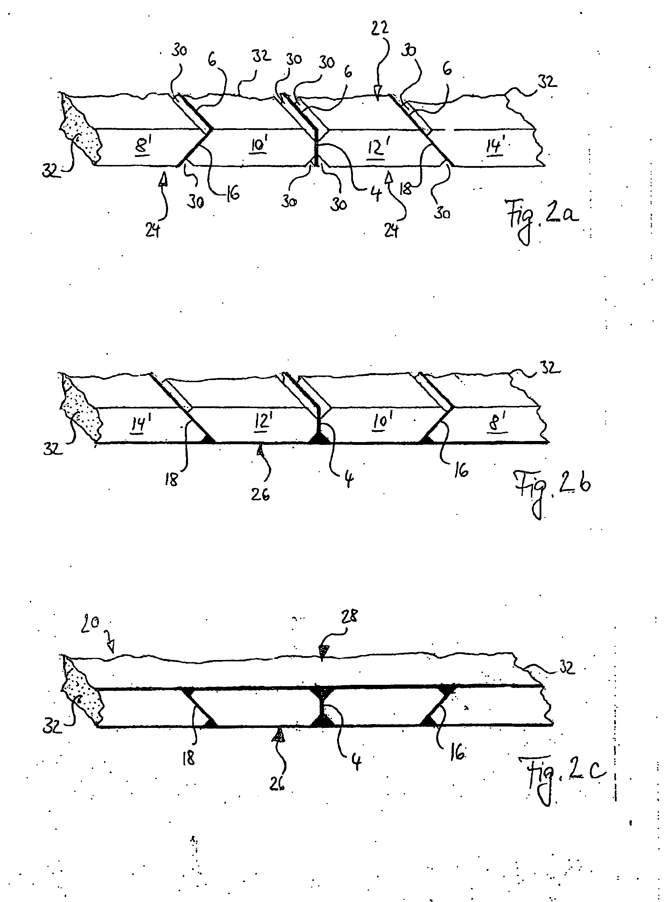

Figur 2 zeigt eine Abwandlung - vielmehr eine Ergänzung - des soweit beschriebenen Verfahrens: in Gestalt von Zwischenräumen 30 dort, wo der jeweilige Querträger an der zu laminierenden Fläche endet. In Figur 2 ist nämlich erkennbar, dass jeder der Materialblocks 8', 10', 12' und 14' dort entlang den Kanten 6 der jeweiligen Querträger 16, 4 und 18 eine Fase von 45° aufweist - also allgemein gesprochen einen Bereich, wo von dem Materialblock Materialvolumen entfernt wurde, damit sich der Zwischenraum 30 ausbildet. Solche Zwischenräume allgemein sind Gegenstand einer zweiten Patentanmeldung, die gleichzeitig mit dieser Anmeldung eingereicht worden ist.

Mit Blick auf 2b ist erkennbar, dass der Zwischenraum dort, wo die Deckschicht 26 bereits laminiert ist, bei deren Laminieren mit Harz volllief. So bildet sich dort eine Verbindung zwischen dem jeweiligen Querträger und der laminierten Deckschicht, die wesentlich großflächiger ist als die entsprechenden Verbindungen gemäß Figur 1. Scher- oder Torsionsspannungen insbesondere bei Biege- und/oder Torsionsbelastung der Platte werden an diesen erfindungsgemäß großflächiger mit den Deckschichten 26, 28 verbundenen Kanten der Querträger durch einen größeren und vorzugsweise auch weniger abrupt seine Richtung ändernden Querschnitt übertragen. Dies vermindert vorteilhaft Materialspannungen und daraus möglicherweise resultierendes Versagen.

Angemerkt sei noch, dass in allen Figuren 1 bis 4 Bruchkanten 32 andeuten, dass das jeweils dargestellte Element sich in diese Richtung weitererstreckt. Auch sei angemerkt, dass gleich nummerierte Elemente in den Figuren die gleiche Gestalt haben.

## Patentansprüche

1. Verfahren zum Herstellen einer Sandwichplatte (20) aus
- mindestens einer zu laminierenden Deckschicht (26, 28) und
- mindestens einem Kernschicht-Materialblock (8, 10, 12, 14, 8', 10', 12', 14') umfassend den Schritt:
• Anordnen eines Kernschicht-Materialblocks und eines Querträgers (4, 16, 18) aus einer zuvor laminierten und ausgehärteten Platte so,
- dass eine Oberfläche des Kernschicht-Materialblocks und eine Kante des Querträgers eine gemeinsam laminierbare Fläche für die zu laminierende Deckschicht bilden und
- dass der Querträger in einem Winkel zu der laminierbaren Fläche liegt,
und umfassend den nachfolgenden Schritt:
• Laminierten der laminierbaren Fläche so, dass Harz eine Verbindung zwischen einerseits der Oberfläche des Kernschicht-Materialblocks und der Kante des Querträgers und andererseits der zu laminierenden Deckschicht herstellt.

2. Verfahren nach dem vorhergehenden Anspruch, **dadurch gekennzeichnet, dass** das Anordnen so erfolgt, dass der Querträger flächenbündig an eine Außenfläche des Kernschicht-Materialblocks angelegt wird.

3. Verfahren nach einem der vorhergehenden Ansprüche, **dadurch gekennzeichnet, dass** die Oberfläche [und die Außenfläche] des Kernschicht-Materialblocks sowie der Querträger eben sind.

4. Verfahren nach einem der vorhergehenden Ansprüche, **dadurch gekennzeichnet, dass** der Querträger zu der zu laminierenden Fläche dort, wo der Querträger an der zu laminierenden Fläche endet, einen Winkel (Stoßwinkel) von 45° bis 90°, insbesondere von 45° oder 90° +/-5°, bildet.

5. Verfahren nach einem der vorhergehenden Ansprüche, **dadurch gekennzeichnet, dass** entlang der gemeinsam laminierbaren Fläche mehrere Kernschicht-Materialblocks und mehrere Querträger in einer einander abwechselnden Reihenfolge angeordnet werden, wobei der Stoßwinkel eines Querträgers 30° bis 60°, insbesondere 45° +/-5°, beträgt und der Stoßwinkel eines anderen Querträgers, insbesondere des nächsten oder übernächsten Querträgers der Reihenfolge, 120° bis 150°, insbesondere 135° -/-5°.

6. Verfahren nach einem der vorhergehenden Ansprüche, gekennzeichnet durch den Schritt zeitlich vor dem Anordnen, dass der Querträger als Abschnitt von einer zuvor laminierten Platte abgeschnitten wird.

7. Sandwichplatte aus
- mindestens einer laminierten Deckschicht (26, 28) und
- mindestens einem Kernschicht-Materialblock (8, 10, 12, 14, 8', 10', 12', 14') und
wobei
- die laminierte Deckschicht auf einer gemeinsam laminierbaren Fläche laminiert ist, die von einer Oberfläche des Kernschicht-Materialblocks und einer Kante eines Querträgers (4, 16, 18) aus einer zuvor laminierten und ausgehärteten Platte gebildet ist, und
- der Querträger in einem Winkel zu der laminierten Deckschicht liegt und
- mindestens in einem Bereich, wo die Kante des Querträgers in der laminierbaren Fläche liegt, Harz der laminierten Deckschicht eine Verbindung zwischen einerseits der Oberfläche des Kernschicht-Materialblocks und der Kante des Querträgers und andererseits der zu laminierenden Deckschicht herstellt.

8. Sandwichplatte nach dem vorhergehenden Anspruch, **dadurch gekennzeichnet, dass** der Querträger flächenbündig an einer Außenfläche des Kernschicht-Materialblocks anliegt.

9. Sandwichplatte nach einem der beiden vorhergehenden Ansprüche, **dadurch gekennzeichnet, dass** die Oberfläche [und die Außenfläche] des Kernschicht-Materialblocks sowie der Querträger eben sind.

10. Sandwichplatte nach einem der drei vorhergehenden Ansprüche, **dadurch gekennzeichnet, dass** der Querträger zu der laminierten Fläche dort, wo der Querträger an der laminierten Fläche endet, einen Winkel (Stoßwinkel) von 45° bis 90°, insbesondere von 45° oder 90° +/-5°, bildet.

11. Sandwichplatte nach einem der vier vorhergehenden Ansprüche, **dadurch gekennzeichnet, dass** entlang der laminierten Fläche mehrere Kernschicht-Materialblocks und mehrere Querträger in einer einander abwechselnden Reihenfolge angeordnet sind, wobei der Stoßwinkel eines Querträgers 30° bis 60°, insbesondere 45° +/-5°. beträgt und der Stoßwinkel eines anderen Querträgers, insbesondere des nächsten oder übernächsten Querträgers der Reihenfolge, 120° bis 150°, insbesondere 135° +/-5°.

12. Sandwichplatte nach einem der vorhergehenden Ansprüche, **dadurch gekennzeichnet, dass** der Querträger ein Abschnitt einer zuvor laminierten Platte ist.

## Claims

1. A method for producing a sandwich panel (20) from
- at least one cover layer to be laminated (26, 28) and
- at least one core layer material block (8, 10, 12, 14, 8', 10', 12', 14') comprising by the step of:
• arranging a core layer material block and a transverse beam (4, 16, 18) made of a previously laminated and hardened panel such
- that a surface of the core layer material block and an edge of the transverse beam form a jointly laminatable area for the cover layer to be laminated and
- that the transverse beam lies at an angle to the laminatable area,
and the subsequent step of:
• laminating the laminatable area such that resin establishes a bond between the surface of the core layer material block and the edge of the transverse beam on the one hand and the cover layer to be laminated on the other hand.

2. The method according to the preceding claim, **characterised in that** the arrangement takes place such that the transverse beam is put flush against an outer surface of the core layer material block.

3. The method according to one of the preceding claims, **characterised in that** the surface [and the outer surface] of the core layer material as well as of the transverse beam are flat.

4. The method according to one of the preceding claims, **characterised in that** the transverse beam forms an angle (impact angle) of 45° to 90°, in particular of 45° or 90° +/-5° to the area to be laminated where the transverse beam ends at the area to be laminated.

5. The method according to one of the preceding claims, **characterised in that** along the jointly laminatable area several core layer material blocks and several transverse beams are arranged in an alternating order, wherein the impact angle of a transverse beam is 30° to 60°, in particular 45° +/-5° and the impact angle of another transverse beam, in particular of the next or next but one transverse beam of the order, is 120° to 150°, in particular 135° +/-5°.

6. The method according to one of the preceding claims, **characterised by** the step temporally before the arrangement of the transverse beam being cut off as a section of a previously laminated panel.

7. A sandwich panel made of
- at least one laminated cover layer (26, 28) and
- at least one core layer material block (8, 10, 12, 14, 8', 10', 12', 14')
wherein
- the laminated cover layer is laminated on a jointly laminatable area, which from a surface of the core layer material block and an edge of a transverse beam (4, 16, 18) made of a previously laminated and herdened panel and
- the transverse beam lies at an angle to the laminated cover layer and
- at least in one area, where the edge of the transverse beam lies in the laminatable area, the resin of the laminated cover layer establishes a bond between the surface of the core layer material block and the edge of the transverse beam on the one hand and the cover layer to be laminated on the other hand.

8. The sandwich panel according to the preceding claim, **characterised in that** the transverse beam rests flush against an outer surface of the core layer material block.

9. The sandwich panel according to one of the preceding claims, **characterised in that** the surface [and the outer surface] of the core layer material block as well as of the transverse beam are flat.

10. The sandwich panel according to one of the three preceding claims, **characterised in that** the transverse beam forms an angle (impact angle) of 45° to 90°, in particular of 45° or 90° +/-5° to the laminated area there where the transverse beam ends at the laminated area.

11. The sandwich panel according to one of the four preceding claims, **characterised in that** along the laminated area several core layer material blocks and several transverse beams are arranged in an alternating order, wherein the impact angle of a transverse beam is 30° to 60°, in particular 45° +/-5° and the impact angle of another transverse beam, in particular of the next or next but one transverse beam of the order, is 120° to 150°, in particular 135° +/-5°.

12. The sandwich panel according to one of the preceding claims, **characterised in that** the transverse beam is a section of a previously laminated panel.

## Revendications

1. Procédé de fabrication d'une plaque sandwich (20) se composant de
- au moins une couche de recouvrement (26, 28) à laminer et
- au moins un bloc de matériau de couche noyau (8, 10, 12, 14, 8', 10', 12', 14'),
comprenant l'étape :
• Disposition d'un bloc de matériau de couche noyau et d'une traverse (4, 16, 18) d'une plaque auparavant laminée et durcie de telle sorte
- qu'une surface du bloc de matériau de couche noyau et une arête de la traverse forment une surface laminable commune pour la couche de recouvrement à laminer et
- que la traverse soit positionnée en angle par rapport à la surface laminable,
et comprenant l'étape ci-après :
• Laminage de la surface laminable de manière à ce que de la résine établisse une liaison entre d'une part la surface du bloc de matériau de couche noyau et l'arête de la traverse et d'autre part la couche de recouvrement à laminer.

2. Procédé selon la revendication précédente, **caractérisé en ce que** la disposition se fait de manière à ce que la traverse soit posée à fleur d'une surface extérieure du bloc de matériau de couche noyau.

3. Procédé selon l'une quelconque des revendications précédentes, **caractérisé en ce que** la surface [et la surface extérieure] du bloc de matériau de couche noyau ainsi que la traverse sont planes.

4. Procédé selon l'une quelconque des revendications précédentes, **caractérisé en ce que** la traverse forme avec la surface à laminer, là où la traverse aboutit sur la surface à laminer, un angle (angle d'impact) de 45° à 90°, en particulier de 45° ou 90° +/-5°.

5. Procédé selon l'une quelconque des revendications précédentes, **caractérisé en ce que**, le long de la surface laminable commune, plusieurs blocs de matériau de couche noyau et plusieurs traverses sont disposés en ordre alternant, dans lequel l'angle d'impact d'une traverse est égal à 30° à 60°, en particulier 45° +/-5°, et l'angle d'impact d'une autre traverse, en particulier de la traverse prochaine ou surprochaine dudit ordre, est égal à 120° à 150°, en particulier 135° +/-5°.

6. Procédé selon l'une quelconque des revendications précédentes, **caractérisé par** l'étape, précédant la disposition dans le temps, consistant en ce que la traverse soit coupée comme section d'une plaque auparavant laminée.

7. Plaque sandwich se composant de
- au moins une couche de recouvrement (26, 28) laminée et
- au moins un bloc de matériau de couche noyau (8, 10, 12, 14, 8', 10', 12', 14') et
dans laquelle
- la couche de recouvrement laminée est laminée sur une surface laminable commune qui est formée par une surface du bloc de matériau de couche noyau et une arête d'une traverse (14, 16, 18) d'une plaque auparavant laminée et durcie, et
- la traverse est positionnée en angle par rapport à la surface laminée et
- au moins dans une zone où l'arête de la traverse se trouve dans de la surface laminable, de la résine de la couche de recouvrement laminée établit une liaison entre d'une part la surface du bloc de matériau de couche noyau et l'arête de la traverse et d'autre part la couche de recouvrement à laminer.

8. Plaque sandwich selon la revendication précédente, **caractérisée en ce que** la traverse est posée à fleur d'une surface extérieure du bloc de matériau de couche noyau.

9. Plaque sandwich selon l'une quelconque des deux revendications précédentes, **caractérisée en ce que** la surface [et la surface extérieure] du bloc de matériau de couche noyau ainsi que la traverse sont planes.

10. Plaque sandwich selon l'une quelconque des trois revendications précédentes, **caractérisée en ce que** la traverse forme avec la surface laminée, là où la traverse aboutit sur la surface laminée, un angle (angle d'impact) de 45° à 90°, en particulier de 45° ou 90° +/-5°.

11. Plaque sandwich selon l'une quelconque des revendications précédentes, **caractérisée en ce que**, le long de la surface laminée, plusieurs blocs de matériau de couche noyau et plusieurs traverses sont disposés en ordre alternant, dans lequel l'angle d'impact d'une traverse est égal à 30° à 60°, en particulier 45° +/-5°, et l'angle d'impact d'une autre traverse, en particulier de la traverse prochaine ou surprochaine dudit ordre, est égal à 120° à 150°, en particulier 135° +/-5°.

12. Plaque sandwich selon l'une quelconque des revendications précédentes, **caractérisée en ce que** la traverse est une section d'une plaque auparavant laminée.
